# EUROPEAN PATENT APPLICATION

(11) **EP 0 860 623 A1**
(43) Date of publication of application: **26.08.1998**
(21) Application number: 98300398.9
(22) Date of filing: 20.01.1998
(51) Int. Cl.: F16D 13/04

(54) **Torque limiting clutch**

(30) Priority: 21.02.1997 GB 9703658; 05.03.1997 GB 9704564
(71) Applicant: LUCAS INDUSTRIES PUBLIC LIMITED COMPANY, Solihull B90 4LA (GB)
(72) Inventor: Hudson, Philip, Burnhill Green, Nr.Wolverhampton WV6 7HT (GB)
(74) Representative: Bailey, Richard Alan

(57) **Abstract**

A torque limiting clutch comprises a first member (10), a second member (14) rotatable with the first member (10) and arranged to move axially relative to the first member (10) upon relative angular movement of the first and second members (10, 14), a third member (26) coaxial with the first member (10) and arranged to be driven by the first member (10) through the second member (14) and clutch means (20, 30) biased by a spring (24).

## Description

The invention relates to a torque limiting clutch for use with an actuator, for example an electromechanical or hydraulic actuator.

Electromechanical and other actuators commonly require torque limitation, and it has been found that, upon start up, conventional torque limitation devices tend to lock up due to inertia effects. If adjustments are made to prevent locking up, then the torque limitation effects are reduced, and the torque limitation device becomes ineffective. A simple clutch could be used, but the friction coefficients of the friction plates of simple clutches tend to be non-uniform, thus accurate control of the torque limitation is not possible.

According to the present invention there is provided a torque limiting clutch comprising a first, rotatable member, a second member axially moveable with respect to the first member against the action of a first spring, a drive member located between the first and second members and engaging a ramped surface carried by one of the first and second members such that angular movement of the second member with respect to the first member causes the drive member to ride along the ramped surface to adjust the relative axial positions of the first and second members, and slipping clutch means preloaded by a second spring and through which rotary motion of the second member is transmitted to a third member, the clutch means being permitted to slip upon the second member moving beyond a predetermined position with respect to the first member.

The invention will further be described, by way of example, with reference to the accompanying drawings, in which:
Figure 1 is a diagrammatic view of a torque limiting clutch in accordance with a first embodiment of the invention; and
Figure 2 is a view similar to Figure 1 of an alternative arrangement.

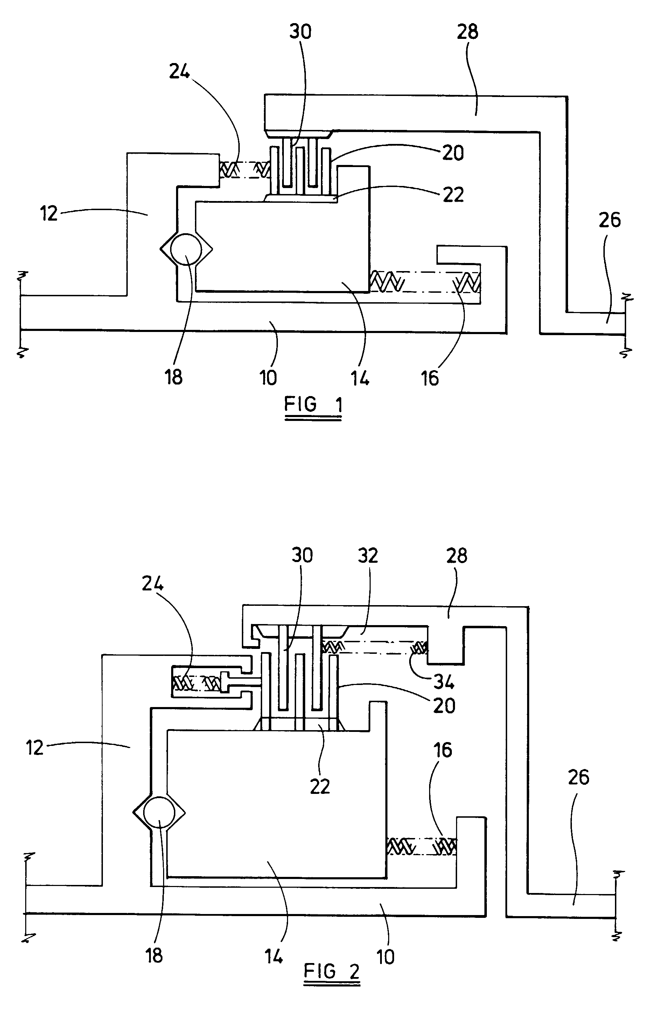

The arrangement illustrated in Figure 1 comprises an input member 10 which is secured to and moveable with a drive shaft. The input member 10 includes a flange 12 against which a member 14 is biased by means of a spring 16. A spherical drive member 18 is located between the flange 12 and the member 14 to transmit rotary motion of the input member 10 to the member 14. The surface of at least one of the flange 12 and the member 14 which engages the drive member 18 is of ramped form. If relative angular movement of the input member 10 and member 14 occurs, such movement results in the drive member 18 riding along the ramped surface(s), adjusting the relative axial positions of the input member 10 and the member 14.

The member 14 carries a plurality of friction plates or discs 20 which are slidable within a groove 22 provided in the member 14. A second spring 24 is located between an end one of the discs 20 and an end of the flange 12 to bias the discs 20 away from the flange 12.

An output member 26 is rotatable about an axis coaxial with that of the input member 10. The output member 26 includes a flange 28 which carries a plurality of friction plates or discs 30 which are interleaved with the discs 20, the discs 30 being slidable within a groove 32. The discs 30 are located in positions such that, when the member 14 occupies a first axial position with respect to the input member 10, the discs 20 are forced into engagement with the discs 30 under the action of the spring 24, the discs 20 being located at an end of their range of movement within the groove 22.

If a braking force is applied to the output member 26, the torque across the torque limiting clutch is increased. When the torque exceeds a predetermined level determined by the spring 16, the member 14 is able to rotate relative to the input member 10 resulting in the drive member 18 riding along the ramped surface(s), thus causing axial movement of the member 14 against the action of the spring 16. Such movement releases the load on the spring 24 and hence reduces the force pushing the discs 20 into engagement with the discs 30. A further increase in the torque further reduces the load on the spring 24 thus the force pushing the discs together is further reduced. As the force is reduced, the discs slip, the level of slipping being dependent upon the torque across the device, the level of torque transmitted being the product of the load (exerted by the spring), the friction coefficient and the friction radius.

Upon the torque across the torque limiting device reducing, the member 14 returns under the action of the spring 16, thus permitting the discs 20 to engage the discs 30 under the action of the spring 24 once more thus reducing and subsequently terminating slipping of the clutch.

The arrangement of Figure 2 differs from that of Figure 1 in that in addition to the discs 20 and 30 being spring biased together by spring 24, a further spring 34 biases the discs 30 into engagement with the discs 20. The range of permitted movement of the discs 20 is limited by the spring 24 being captive. In this arrangement, when the member 14 moves beyond a predetermined position, the discs 20 are no longer free to move within the groove 22 as a result of the spring 24 being captive, and the transmission of torque through the clutch once this position is reached is dependent upon the action of the spring 34 alone. Thus over a small change in applied torque, the load applied to the discs 20, 30 is changed from being applied by the spring 24 to being applied by the further spring 34.

By appropriate selection of the rates of the springs 16, 24, and in the Figure 2 embodiment, the further spring 34, the torque at which slipping of the clutch commences can be accurately controlled. The use of a spherical drive member in engagement with a ramped surface is an accurate torque measuring device, thus the invention provides an arrangement which operates reliably.

Although in the description hereinbefore, the drive member is of spherical form, it will be appreciated that the drive member could take the form of a cylindrical roller.

## Claims

1. A torque limiting clutch comprising a first, rotatable member (10), a second member (14) axially moveable with respect to the first member (10) against the action of a first spring (16), a drive member (18) located between the first and second members (10, 14) and engaging a ramped surface carried by one of the first and second members (10, 14) such that angular movement of the second member (14) with respect to the first member (10) causes the drive member (18) to ride along the ramped surface to adjust the relative axial positions of the first and second members (10, 14), and slipping clutch means (20, 30) preloaded by a second spring (24) and through which rotary motion of the second member (14) is transmitted to a third member (26), the clutch means (20, 30) being permitted to slip upon the second member (14) moving beyond a predetermined position with respect to the first member (10).

2. A torque limiting clutch as claimed in Claim 1, wherein the slipping clutch means (20, 30) comprises a plurality of first clutch members (20) carried by the second member (14) and a plurality of second clutch members (30) carried by the third member (26), the second spring (24) biasing the first clutch members (20) into engagement with the second clutch members (30).

3. A torque limiting clutch as claimed in Claim 2, further comprising a third spring (34) biasing the second clutch members (30) towards the first clutch members (20).

4. A torque limiting clutch as claimed in Claim 3, wherein the second spring (24) is captive, the second spring (24) becoming inoperable when the second member (14) moves beyond a predetermined distance relative to the first member (10).

5. A torque limiting clutch as claimed in any one of the preceding claims, wherein the drive member (18) comprises a spherical member.

6. A torque limited clutch as claimed in any one of Claims 1 to 4, wherein the drive member (18) comprises a roller orientated to ride along the ramped surface upon relative rotation of the first and second members (10, 14).
